# EUROPÄISCHE PATENTSCHRIFT

(11) **EP 2 190 701 B1**
(45) Veröffentlichungstag und Bekanntmachung des Hinweises auf die Patenterteilung: **27.03.2019**
(21) Anmeldenummer: 08787050.7
(22) Anmeldetag: 08.08.2008
(51) Int. Cl.: B60R 25/00, G07C 9/00

(54) **GRIFFVORRICHTUNG**
HANDLE UNIT
SYSTÈME DE POIGNÉE

(30) Priorität: 24.08.2007 DE 102007040294
(43) Veröffentlichungstag der Anmeldung: 02.06.2010
(73) Patentinhaber: Huf Hülsbeck & Fürst GmbH & Co. KG, 42551 Velbert (DE)
(72) Erfinder: MÜLLER, Ulrich, 42549 Velbert (DE)
(74) Vertreter: Patentanwälte Bals & Vogel
(86) Internationale Anmeldenummer: PCT/EP2008/060458
(87) Internationale Veröffentlichungsnummer: WO 2009/027206

(56) Entgegenhaltungen:
- DE-A1- 10 330 525
- DE-C1- 19 813 782
- FR-A- 2 808 339
- US-A- 5 682 135

## Beschreibung

Die Erfindung betrifft eine Griffvorrichtung zur Funktionsauslösung eines Schlosses zum Öffnen und/oder Schließen eines beweglichen Teils, insbesondere einer Tür, einer Heckklappe oder dergleichen eines Kraftfahrzeugs, mit einer Elektronikeinheit und einem Betätigungselement, wobei die Elektronikeinheit zur Datenkommunikation mit einem fahrzeugseitigen Teil, insbesondere einem Sicherheitssystem dient, das Betätigungselement eine Betätigungszone überwacht, eine Auslösung eines Signals mittels des Betätigungselements durch eine Bewegung eines Objektes innerhalb der Betätigungszone erfolgt.

Diese Art Griffvorrichtungen werden vorzugsweise als Türaußengriffe bei einem Kraftfahrzeug eingesetzt. So können Griffvorrichtungen ein feststehendes Griffelement aufweisen, welches an dem beweglichen Teil fixiert ist.

Dabei kann an dem feststehenden Griffelement gezogen oder gedrückt werden, um den beweglichen Teil zu öffnen oder zu schließen. Ferner weisen einige Griffvorrichtungen auch ein bewegliches Griffelement auf, welches an dem feststehenden Griffelement bewegbar, insbesondere dreh- und/oder schwenkbar, angeordnet ist, und zur eigentlichen Betätigung des Schlosses dient. Dabei kann die Betätigung des Schlosses rein elektronisch oder auch mechanisch funktionieren.

Aus der Offenlegungsschrift DE 101 32 077 A1 ist eine Griffvorrichtung bekannt, bei der ein Signal durch einen kapazitiven Sensor ausgelöst wird. Nähert sich ein Benutzer der Griffvorrichtung, führt dieses zu einer Beeinflussung des von dem kapazitiven Sensor aufgebauten elektrischen Feldes. Als nachteilig hat es sich bei solcher Art von Griffvorrichtungen herausgestellt, dass das elektromagnetische Feld und damit der Sensor der Griffvorrichtung, von Umwelteinflüssen stark beeinflusst werden können. Darüber hinaus kann mit der beschriebenen Griffvorrichtung nur ein einziges Signal ausgelöst werden. Erst eine Kombination mehrerer Sensoren ermöglicht das Auslösen eines zweiten, respektiven dritten Signales. Dieses führt allerdings zu einer weiteren Verteuerung der beschrieben Griffvorrichtung.

Die US 5 682 135 A offenbart eine Griffvorrichtung einer Fahrzeugtür mit einer Elektronikeinheit und einem Betätigungselement. Es ist ein mit der Elektronikeinheit verbundenes Sicherheitssystem vorgesehen, um die Authentifizierungsabfrage eines Benutzers durchzuführen. Das Betätigungselement ist vorgesehen, das eine Betätigungszone überwacht, um eine Präsenz eines Benutzers zu erfassen. Nach dem Erfassen eines berechtigten Benutzers löst das Betätigungselement ein Signal aus, durch das das Schloss entriegelt wird. Dabei kann mit der beschriebenen Griffvorrichtung nur ein einziges Signal ausgelöst werden.

Die FR 2 808 339 A offenbart eine Greifvorrichtung und ein Verfahren gemäß dem Oberbegriff der unabhängigen Ansprüche.

Somit liegt der vorliegenden Erfindung die Aufgabe zugrunde, eine Griffvorrichtung zur Funktionsauslösung eines Schlosses zum Öffnen und/oder Schließen eines beweglichen Teils zu erhalten, die einen hohen Bedienungskomfort aufweist und über eine einfache und Platz sparende Konstruktion verfügt.

Zur Lösung dieser Aufgabe wird eine Griffvorrichtung mit den Merkmalen des Anspruches 1 vorgeschlagen. Darüber hinaus wird die Aufgabe durch ein Verfahren zur berührungslosen Auslösung eines Signals an einer Griffvorrichtung in vorteilhafter Weise gelöst. Weitere vorteilhafte Ausführungsformen der vorliegenden Erfindung und des Verfahrens ergeben sich aus den jeweiligen Unteransprüchen.

Erfindungsgemäß ist es vorgesehen, dass das Betätigungselement die Betätigungszone optisch derart überwacht, dass eine Erfassung eines vorgegebenen Bewegungsmusters durch eine Bewegung des Objektes zur Auslösung des Signals führt, dass ein zweites Bewegungsmuster ein zweites Signal auslöst, wobei in dem Bewegungsmuster das Objekt in einer ersten Richtung durch die Betätigungszone bewegt wird und in dem zweiten Bewegungsmuster das Objekt in einer zweiten Richtung durch die Betätigungszone bewegt wird, und wobei die erste Richtung und die zweite Richtung entgegengesetzt sind, und dass zur Aktivierung des Verriegelungsvorgangs das Objekt gemäß dem Bewegungsmuster in der ersten Richtung durch die Betätigungszone bewegt wird und zur Aktivierung des Entriegelungsvorgangs das Objekt gemäß dem zweiten Bewegungsmuster in der zweiten Richtung durch die Betätigungszone bewegt wird.

Der Kerngedanke der Erfindung besteht darin, dass mittels der Griffvorrichtung eine Funktion eines Schlosses ausgelöst werden kann. Diese Funktion kann in einem Öffnen oder Schließen eines beweglichen Teils, wie etwa einer Tür oder einer Klappe sowie einem Ver- oder Entriegeln einer Schließvorrichtung bestehen. Zur Auslösung dieser Funktion ist erfindungsgemäß vorgesehen, dass eine Betätigungszone optisch überwacht wird. Eine optische Überwachung weist den Vorteil auf, dass Umwelteinflüsse nicht zu einer Beeinträchtigung der Sensitivität oder der Größe der Betätigungszone führen. Im Rahmen der Erfindung wird gefordert, dass ein Objekt eine Bewegung innerhalb der Betätigungszone ausführen muss, die mit einem vorgegebenen Bewegungsmuster übereinstimmen muss, um eine der genannten Funktionen auszulösen. Es bedarf somit nicht einer beliebigen Bewegung innerhalb der Betätigungszone, sondern einer Bewegung, die einem vordefinierten Bewegungsmuster entspricht. Dadurch ist zum einen sichergestellt, dass zufällige Bewegungen innerhalb der Betätigungszone nicht zu einer Funktionsauslösung führen. Andererseits können eine Anzahl von Bewegungsmustern vordefiniert werden, welche jeweils unterschiedliche Funktionen auslösen. So kann beispielsweise eine Bewegung in eine erste Richtung zu einem Entriegeln eines Schlosses oder Öffnen einer Tür führen. Eine entgegengesetzte Bewegung in eine zweite Richtung kann hingegen ein Verriegeln des Schlosses oder Schließen der Tür nach sich ziehen. Dadurch, dass die Bewegung innerhalb der Betätigungszone optisch abgetastet und mit einem Bewegungsmuster verglichen wird, ist es nicht mehr nötig, die Griffvorrichtung zu berühren. Dieses ist insbesondere dann vorteilhaft, wenn die Griffvorrichtung verschmutzt ist und ein potenzieller Benutzer diese nicht berühren möchte. Erfindungsgemäß wird die Griffvorrichtung bei einer Verwendung in einem Kraftfahrzeug kombiniert mit einem Keyless-Entry-System. Solche Art Keyless-Entry-Systeme erlauben einen schlüssellosen Zugang zu Fahrzeugen, wozu ein Dialog zwischen einem mobilen Identifikationsgeber und einem Sicherheitssystem des Kraftfahrzeuges stattfindet. Je nach Ausgestaltung kann das von der Griffvorrichtung ausgelöste Signal einen Dialog zwischen den beiden Elementen des Keyless-Entry-Systems starten und - unter dem Vorbehalt der positiven Identifizierung - die Funktion des Schlosses und/oder der Tür auslösen.

Eine weitere vorteilhafte Ausführungsvariante zeichnet sich dadurch aus, dass das vorgegebene Bewegungsmuster eine zumindest zweidimensionale Bewegung des Objektes in der Betätigungszone ist.

Eine die Erfindung verbessernde Maßnahme sieht vor, dass mittels des Betätigungselements eine schlüssellose Aktivierung eines Ver- und Entriegelungsvorgangs einer Schließvorrichtung auslösbar ist, insbesondere dass die schlüssellose Aktivierung berührungslos innerhalb der Betätigungszone auslösbar ist.

Eine weitere vorteilhafte Ausführungsform der Erfindung zeichnet sich dadurch aus, dass das Signal das Öffnen und/oder Schließen des beweglichen Teils auslöst, insbesondere das Signal das Öffnen und/oder Schließen einer Tür, einer Heckklappe oder dergleichen eines Kraftfahrzeugs auslöst.

Eine die Erfindung verbessernde Maßnahme sieht vor, dass je nach vorgegebenem Bewegungsmuster das Betätigungselement als ein Taster, ein Schieberegler, ein Annäherungsdetektor, ein Bewegungsdetektor und/oder ein dreidimensionale Bewegungen erfassender Detektor dient.

Eine weitere vorteilhafte Ausführungsvariante zeichnet sich dadurch aus, dass die Betätigungszone eine optisch überwachte dreidimensionale Zone ist, insbesondere dass das Betätigungselement einen Sensor aufweist, besonders bevorzugt dass der Sensor optoelektronisch ausgestaltet ist, insbesondere dass der Sensor mindestens einen Lichtsender und wenigstens einen Lichtempfänger aufweist, wobei mittels des Sensors das Bewegungsmuster des Objektes in der Betätigungszone bestimmbar ist.

Eine die Erfindung verbessernde Maßnahme sieht vor, dass das Objekt eine menschliche Hand, ein menschlicher Finger oder ein mechanisches Bauteil ist.

Erfindungsgemäß ist es vorgesehen, dass die Griffvorrichtung eine Elektronikeinheit aufweist. Diese Elektronikeinheit kann einen elektronischen Bestandteil eines Keyless-Entry-Systems darstellen. Dabei spielt es keine Rolle, ob es sich hierbei um ein sogenanntes Active- bzw. Passiv-Keyless-Entry-System handelt. Bei beiden Keyless-Entry-Systemen ist es im Normalfall möglich, das bewegliche Teil bzw. Tür oder Klappe schlüssellos zu öffnen oder zu schließen.

Bei einer zweckmäßigen Ausgestaltung der erfindungsgemäßen Griffvorrichtung können sämtliche Elektronikeinheiten, die in der Griffvorrichtung angeordnet sind, ausschließlich in dem beweglichen Griffelement vorgesehen sein. Selbstverständlich können auch bei dieser Variante elektrische Leitungen, Kabel oder dergleichen von dem beweglichen Griffelement durch das feststehende Griffelement durchgeführt werden, um die Elektronikeinheiten elektrisch mit der übrigen Fahrzeugelektronik zu verbinden.

Optional ist es möglich, dass die Elektronikeinheiten im beweglichen Griffelement über einen Transponder mit Energie versorgbar sind, wobei der Transponder, insbesondere in der Nähe zur Griffvorrichtung, im beweglichen Teil angeordnet ist. Gleichzeitig kann der Transponder auch zum Datenaustausch mit den Elektronikelementen im beweglichen Griffelement dienen. Somit ist nicht nur eine drahtlose Energieübertragung, sondern auch eine drahtlosen Datenübertragung möglich. Dabei kann der Datenaustausch durch eine entsprechende Modulation bei der Energieübertragung erfolgen. Eine einfache drahtlose Energieübertragung kann zum Beispiel durch Induktion mit einem Spulensystem erfolgen. Zu diesem Zweck ist in dem Transponder eine Primärspule angeordnet und die Elektronikelemente im beweglichen Griffelement weisen eine Sekundärspule auf, in der die erforderliche Energie induziert wird.

Damit ein Zugang zu dem Fahrzeug auch bei einem Notfall möglich ist, wenn das Sicherheitssystem (Keyless-Entry-System) das Schloss nicht entriegelt, kann zusätzlich ein mechanischer Schließzylinder in der Griffvorrichtung angeordnet sein. Dabei ist es zweckmäßig, dass der mechanische Schließzylinder im feststehenden Griffelement angeordnet ist und eine mechanische Entriegelung bzw. Entsicherung des Schlosses ermöglicht.

Um eine aerodynamische und ergonomische Ausgestaltung der Griffvorrichtung zu bewirken, kann es vorgesehen sein, dass die Griffvorrichtung mit dem beweglichen Teil eine Mulde bildet, in die ein Benutzer eingreifen kann. Hierdurch entstehen zumindest drei Bereiche bei der Griffvorrichtung, nämlich ein erster Bereich, in dem der Schließzylinder angeordnet ist, ein mittlerer Bereich, in dem die Griffmulde vorgesehen ist, und ein dritter Bereich, der nach der Griffmulde an der Schließzylinder abgewandten Seite angeordnet ist. Bei dieser Ausgestaltung kann das feststehende Griffelement im ersten und dritten Bereich bzw. links und rechts neben der Griffmulde fest an dem beweglichen Teil fixiert werden. Hierzu können mechanische Befestigungselemente, insbesondere Schrauben, dienen, die in das feststehende Griffelement eindrehbar sind. Selbstverständlich können auch andere mechanische Befestigungselemente zur Halterung des feststehenden Griffelementes verwendet werden, wie z. B. Nieten, Rastverbindungen, Schweißverbindungen oder dergleichen. Ferner empfiehlt es sich, die Griffvorrichtung vertieft im beweglichen Teil anzuordnen, wobei zu diesem Zweck ein entsprechender Absatz im beweglichen Teil vorgesehen ist. Hierdurch steht die Griffvorrichtung nur unwesentlich aus der Oberfläche des beweglichen Teils heraus und ist damit besonders aerodynamisch ausgestaltet. Durch die weitere im Absatz des beweglichen Teils vorgesehene Vertiefung wird die Griffmulde für die Griffvorrichtung im beweglichen Teil gebildet. Damit ist auch eine ergonomische Handhabung der Griffvorrichtung erreichbar.

Erfindungsgsgemäß ist das Betätigungselement in einem Gehäuse angeordnet.

Erfindungsgemäß ist vorgesehen, dass ein Abdeckelement das Betätigungselement überdeckt, wobei das Abdeckelement stoffschlüssig mit dem Gehäuse verbunden ist. Die stoffschlüssige Verbindung des Abdeckelementes mit dem Gehäuse kann durch bekannte Clipverfahren oder Schweißverfahren sichergestellt werden. Darüber hinaus kann das Abdeckelement als lasertransparent und das Gehäuse als laserabsorbierend ausgestaltet sein, um ein Laserverschweißen des Abdeckelementes mit dem Gehäuse zu ermöglichen. Durch die stoffschlüssige Verbindung des Abdeckelementes mit dem Gehäuse ist sichergestellt, dass keine Umwelteinflüsse in das Innere der Griffvorrichtung eindringen können.

Erfindungsgsgemäß ist das Abdeckelement lichtdurchlässig, insbesondere ist das Abdeckelement lichtdurchlässig für die von dem Lichtsender emittierte Wellenlänge, besonders bevorzugt dass die Betätigungszone oberhalb einer dem Objekt zugewandten Außenseite des Abdeckelementes angeordnet ist. In dieser Ausführungsvariante ist das Abdeckelement lichtdurchlässig gestaltet, um so eine Betätigungszone an einer Außenfläche der Griffvorrichtung aufzubauen. Ein Benutzer kann folglich über die Griffvorrichtung streichen oder diesen nahezu berühren, um so das Signal auszulösen.

Dazu ist das Betätigungselement im Inneren des Gehäuses angeordnet und das Abdeckelement lichtdurchlässig gestaltet. So können die Lichtsender ungehindert ein Licht ausstrahlen, welches durch das Abdeckelement tritt. Von dem Objekt reflektiertes Licht kann ebenfalls ohne Abschwächung durch das Abdeckelement hindurchtreten und von den Lichtempfängern registriert werden. Dadurch ist es dem Betätigungselement möglich, die Bewegung des Objektes - beispielsweise der Hand - innerhalb der Betätigungszone auf der Außenseite des Gehäuses der Griffvorrichtung zu registrieren.

Eine die Erfindung verbessernde Maßnahme sieht vor, dass das Abdeckelement undurchlässig ist und das Betätigungselement eine vom Objekt abgewandte Unterseite des Abdeckelementes überwacht. Bei dieser Ausführungsvariante überwacht das Betätigungselement nicht einen Bereich auf der Außenfläche der Griffvorrichtung. Vielmehr wird ein innerer Bereich der Griffvorrichtung optisch abgetastet. Bei dem überwachten Objekt handelt es sich dabei um das Abdeckelement, welches als Übermittlungsmittel für eine Berührung des mobilen Identifikationsgebers fungiert. Möchte ein Benutzer ein Signal auslösen, berührt er die Griffvorrichtung im Bereich des Abdeckelementes. Diese Berührung führt zu einer plastischen Deformation des Abdeckelementes. Diese Deformation führt dazu, dass das Abdeckelement eine Bewegung innerhalb der Betätigungszone des Betätigungselements ausführt. Diese Bewegung führt dann zu einer Auslösung des Signales. In einer vorteilhaften Ausgestaltung dieser Ausführungsvariante weist die Außenseite des Abdeckelementes eine Oberflächenstruktur auf. Dadurch ergibt sich für einen potenziellen Benutzer ein taktiles Gefühl bei der Auslösung des Signales. Darüber hinaus kann das Abdeckelement unterschiedliche Segmente aufweisen, in denen jeweils verschiedene Signale ausgelöst werden. Wird eines dieser Segmente deformiert, registriert das Betätigungselement jeweils den Ort der Deformation und kann daraus auf das jeweils auszulösende Signal zurückschließen.

Eine weitere die Erfindung verbessernde Maßnahme sieht vor, dass die Betätigungszone oberhalb einer dem Objekt zugewandten Außenfläche des Gehäuses angeordnet ist, insbesondere dass die Betätigungszone eine tropfenartige Form aufweist.

Eine weitere vorteilhafte Ausführungsvariante der Erfindung zeichnet sich dadurch aus, dass der Lichtsender eine Leuchtdiode (LEDs), eine Organische Leuchtdiode (OLEDs) oder Laserdiode ist, insbesondere dass der Lichtsender ein infrarotes Licht emittiert. Eine lichtemittierende Diode (LED) ist ein Halbleiterbauteil, das inkohärentes Licht mit einem schmalen Spektrum emittiert. Die Wellenlänge des emittierten Lichtes hängt ab von den Halbleiterbauteilen sowie möglichen Dotierungen. Die ebenfalls nutzbare organische lichtemittierende Diode (OLED) ist ein spezieller Typ einer LED, in welcher die lichtemittierende Schicht aus organischen Komponenten geformt ist.

Weiterhin sieht eine verbessernde Maßnahme vor, dass der Sensor mindestens eine optoelektronische Messvorrichtung mit wenigstens fünf Lichtsendern und wenigstens einem Lichtempfänger enthält.

Eine weitere vorteilhafte Ausführungsvariante der Erfindung zeichnet sich dadurch aus, dass der Sensor mindestens eine optoelektronische Messvorrichtung mit wenigstens zwei Lichtsendern und wenigstens einem Lichtempfänger enthält, wobei den Lichtsendern Erfassungskeulen zugeordnet sind, die eine innerhalb der Betätigungszone liegende entfernte Zone und eine nähere Zone definieren, und dass das Betätigungselement ferner eine Auswerteeinheit aufweist, wobei die Auswerteeinheit eine Auslösung des Signals ausgehend von einer Bewegung des Objektes aus einer Position in der entfernten Zone in einer vorbestimmten Richtung in die nähere Zone auslöst.

Eine weitere die Erfindung verbessernde Maßnahme sieht vor, dass der Sensor ein HALIOS® Baustein ist.

Eine weitere vorteilhafte Ausführungsform der Erfindung zeichnet sich dadurch aus, dass das Betätigungselement wenigstens ein Sendeelement für Strahlung im Wellenlängenbereich des Lichts und wenigstens einem Empfangselement zum Empfang zumindest eines Teils der vom Sendelement ausgestrahlten und vom Objekt rückgestrahlten Strahlung sowie mit einem im Strahlengang zwischen Sendeelement und Empfangselement angeordneten Lichtleiter aufweist, wobei der Lichtleiter selbst Lichtkopplungsmittel zum Einkoppeln für die am Objekt diffus gestreute, zuvor durch den Lichtleiter gestrahlte Strahlung aufweist.

Weiterhin sieht eine verbessernde Maßnahme vor, dass die Lichtkopplungsmittel das vom Objekt quer zur Längserstreckung des Lichtleiters gestreute Licht in den Lichtleiter einkoppeln.

Eine weitere vorteilhafte Ausführungsform der Erfindung zeichnet sich dadurch aus, dass das Betätigungselement eine Anordnung zum Messen oder Erkennen einer Veränderung an einem rückstrahlenden Element oder infolge eines rückstrahlenden Elements aufweist, wobei die Anordnung zum Messen oder Erkennen einer Veränderung an einem rückstrahlenden Element oder infolge eines rückstrahlenden Elements, das von der Anordnung durch ein für eine bestimmte Strahlung durchlässiges Medium getrennt ist, mit
- einem sensoraktiven Bereich im Medium mit wenigstens zwei Messstrecken mit zugeordneten Strahlungsquellen zum Einstrahlen der bestimmten Strahlung in das strahlungsdurchlässige Medium und mit wenigstens einem Strahlungsempfänger, wobei der Strahlungsempfänger im Überlappungsbereich der Zonen eines Maximums des Strahlungsstärkeverlaufes bei dem im Ruhestand befindlichen sensoraktivem Bereich aus der dem rückstrahlenden Element gegenüberliegenden Seite des Mediums austretenden Rückstrahlung der dem Strahlungsempfänger zugeordneten Strahlungsquellen zur Erzeugung eines der empfangenen Strahlung entsprechenden Detektionssignales angeordnet ist,
- einer Schalteranordnung zu einem zeitabschnittsweisen Wirksamschalten jeder der einzelnen Messstrecken in einer aufeinanderfolgenden, sich wiederholenden Schaltfolge einer bestimmten Schaltfolgefrequenz,
- einer Einstellanordnung zur Einstellung einer derart bemessenen Strahlungsleistung der der jeweiligen Messtrecke zugeordneten Strahlungsquelle, dass bei im Ruhestand befindlichen sensoraktivem Bereich jede Messtrecke einen Abschnitt des Detektionssignales erzeugt, dessen mittlerer Amplitudenwert gleich dem mittleren Amplitudenwert der der wenigstens einen anderen Messstrecke zugeordneten Abschnitte des Detektionssignales ist,
- einer dem Strahlungsempfänger nachgeschalteten Filterschaltung zur Übertragung des auf eine Schwingung der Schaltfolgefrequenz modulierten Detektionssignales an eine Auswerteanordnung zur Erzeugung eines Steuer- und/oder Messwertsignales aus dem in der Auswerteanordnung gemessenen oder festgestellten Unterschied der den einzelnen Messstrecken zugeordneten Abschnitte des Detektionssignales versehen ist.

Eine weitere die Erfindung verbessernde Maßnahme sieht vor, dass die wenigstens zwei Messstrecken durch wenigstens einen Lichtsender und mehrere Lichtempfänger gebildet sind.

Erfindungsgemäß wird die Aufgabe auch durch ein Verfahren zur berührungslosen Auslösung eines Signals an einer Griffvorrichtung gelöst, wobei die Griffvorrichtung zur Funktionsauslösung eines Schlosses zum Öffnen und/oder Schließen eines beweglichen Teils, insbesondere einer Tür, einer Heckklappe oder dergleichen eines Fahrzeugs dient, die Griffvorrichtung eine Elektronikeinheit und ein Betätigungselement aufweist, die Elektronikeinheit zur Datenkommunikation mit einem fahrzeugseitigen Teil, insbesondere einem Sicherheitssystem, dient, eine Betätigungszone mittels des Betätigungselementes überwacht wird, und mittels des Betätigungselements ein Signal durch eine Bewegung eines Objektes innerhalb der Betätigungszone ausgelöst wird und dass die Betätigungszone durch das Betätigungselement optisch überwacht wird, und durch eine Erfassung eines vorgegebenen Bewegungsmusters durch eine Bewegung des Objektes das Signal ausgelöst wird. Die Erfindung sieht dabei vor, dass ein zweites Bewegungsmuster ein zweites Signal auslöst, wobei in dem Bewegungsmuster das Objekt in einer ersten Richtung durch die Betätigungszone bewegt wird und in dem zweiten Bewegungsmuster das Objekt in einer zweiten Richtung durch die Betätigungszone bewegt wird, und wobei die erste Richtung und die zweite Richtung entgegengesetzt sind, und dass zur Aktivierung des Verriegelungsvorgangs das Objekt gemäß dem Bewegungsmuster in der ersten Richtung durch die Betätigungszone bewegt wird und zur Aktivierung des Entriegelungsvorgangs das Objekt gemäß dem zweiten Bewegungsmuster (31) in der zweiten Richtung durch die Betätigungszone (60) bewegt wird. Das Betätigungselement wird in einem Gehäuse angeordnet, wobei ein Abdeckelement das Betätigungselement überdeckt, wobei das Abdeckelement lichtdurchlässig ist, wobei das Abdeckelement stoffschlüssig mit dem Gehäuse verbunden ist.

Eine das Verfahren verbessernde Maßnahme sieht vor, dass das Bewegungsmuster eine zumindest zweidimensionale Bewegung des Objektes in der Betätigungszone beinhaltet, insbesondere dass das Bewegungsmuster eine zumindest dreidimensionale Bewegung des Objektes in der Betätigungszone beinhaltet.

Das Bewegungsmuster kann eine beliebige Bewegung innerhalb der Betätigungszone beinhalten. So sind streichende, tastende oder auch rotierende Bewegung des Objektes, wie etwa einer Hand denkbar. Entscheidend ist nur, dass das Bewegungsmuster vordefiniert ist. Nur wenn die Bewegung des Objekts mit dem vordefinierten Bewegungsmuster übereinstimmt, wird das Signal ausgelöst.

Erfindungsgemäß können somit durch unterschiedliche Bewegungsmuster verschiedenartige Signale ausgelöst werden. Wird die erfindungsgemäße Griffvorrichtung in einem Kraftfahrzeug eingesetzt, kann beispielsweise durch ein Streichen durch die Betätigungszone ein Verriegelungssignal ausgelöst werden. Das optische Betätigungselement erkennt die gradlinige Bewegung des Objektes sowie dessen Richtung und Geschwindigkeit. Aus den ermittelten Werten kann in einer Rechnereinheit bestimmt werden, ob die gemessene Bewegung mit dem Bewegungsmuster übereinstimmt. Ist dieses der Fall, wird das Verriegelungssignal ausgelöst. Im Gegensatz dazu kann eine tastende Bewegung auf die Griffvorrichtung zu, zur Auslösung des zweiten Signales führen. Wiederum vermisst das Betätigungselement optisch die Bewegung des Objektes innerhalb der Betätigungszone. Stimmt diese mit dem zweiten Bewegungsmuster überein, wird das zweite Signal - ein Entriegelungssignal - ausgelöst.

Eine weitere die Erfindung verbessernde Maßnahme sieht vor, dass durch das Ausführen des Bewegungsmusters eine schlüssellose Aktivierung eines Ver- und Entriegelungsvorgangs einer Schließvorrichtung ausgelöst wird, insbesondere dass die schlüssellose Aktivierung berührungslos innerhalb der Betätigungszone ausgelöst wird.

Eine weitere vorteilhafte Ausführungsform zeichnet sich dadurch aus, dass zur Aktivierung des Entriegelungsvorgangs ein gradliniges Bewegungsmuster ausgeführt wird, insbesondere dass zur Aktivierung des Entriegelungsvorgangs ein Benutzer über die Betätigungszone streicht.

Eine die Erfindung verbessernde Maßnahme sieht vor, dass das Bewegungsmuster als ein Ver- oder Entriegelungsvorgang der Schließvorrichtung auf einem Display angezeigt wird.

Eine weitere vorteilhafte Ausführungsvariante zeichnet sich dadurch aus, dass ein Nachweis einer Berechtigung zum berührungslosen Auslösen eines Signals in der Griffvorrichtung durchgeführt wird, insbesondere dass ein mobiler Identifikationsgeber mit der Elektronikeinheit einen Dialog bei Ausführung eines Bewegungsmusters in der Betätigungszone durchführt, besonders bevorzugt dass die Berechtigung im Rahmen des Dialogs überprüft wird.

Weiterhin sieht eine verbessernde Maßnahme vor, dass bei einem positiven Ergebnis einer Berechtigungsprüfung das Signal erzeugt wird.

Eine weitere vorteilhafte Ausführungsform zeichnet sich dadurch aus, dass das Betätigungselement einen Sensor aufweist und der Sensor wenigstens zwei erste Lichtquellen, die Licht zeitsequenziell getaktet, phasenweise aussenden, und wenigstens einem Empfänger zum Empfang zumindest des von den ersten Lichtquellen stammenden, taktsynchronen Wechsellichtanteils, aufweist.

Eine die Erfindung verbessernde Maßnahme sieht vor, dass der Sensor eine durch wenigstens eine Lichtquelle eingestrahlte Lichtintensität so regelt, dass ein taktsynchroner Wechsellichtanteil, der zwischen verschiedenen Phasen auftritt, am Empfänger zu Null wird und zur Regelung der eingestrahlten Lichtintensität ein Empfangssignal am Empfänger bezüglich der Phasenlage bestimmt wird und damit eine Stellgröße erzeugt wird.

Ein Verfahren zeichnet sich dadurch aus, dass zur Erkennung eines Bewegungsmusters mit einer vorgenannten Griffvorrichtung folgende Schritte ausgeführt werden:
- Aussenden einer Strahlung im Wellenlängenbereich des Lichts,
- Durchstrahlen des Lichts durch einen Lichtleiter bis zum Objekt,
- Rückstrahlen zumindest eines Teils des Lichts vom Objekt und Rückkoppeln des rückgestrahlten Lichts in den Lichtleiter,
- Empfangen des rückgestrahlten Lichts unter Bildung eines Eingangssignals,
- Auswerten des Eingangssignals zur Bestimmung der Bewegung und/oder Position des Objekts,
- Einkoppeln des diffus rückgestreuten Lichts über Lichtkopplungsmittel des Lichtleiters selbst in den Lichtleiter.

Weiterhin sieht eine verbessernde Maßnahme vor, dass die Lichtkopplungsmittel das vom Objekt rückgestreute Licht quer zur Längserstreckung des Lichtleiters in den Lichtleiter einkoppeln.

Eine weitere vorteilhafte Ausführungsform zeichnet sich dadurch aus, dass die vom Sendeelement durch den Lichtleiter gestrahlte Strahlung ausgehend von der dem Objekt gegenüberliegenden Seite quer durch den Lichtleiter gestrahlt wird, bevor sie vom Objekt rückgestreut wird.

Eine die Erfindung verbessernde Maßnahme sieht vor, dass die vom Sendeelement entlang des Lichtleiters gestrahlte Strahlung von den Lichtkopplungsmitteln zumindest teilweise aus dem Lichtleiter ausgekoppelt wird, bevor sie vom Objekt gestreut wird.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele der Erfindung im Einzelnen beschrieben sind. Es zeigen:
- Figur 1: eine schematische Darstellung eines mobilen Identifikationsgebers, der in Datenkommunikation mit einer Schließvorrichtung eines Kraftfahrzeuges steht,
- Figur 2: eine schematische Darstellung einer Griffvorrichtung,
- Figur 3: eine Seitenansicht eines Lichtleiters mit Lichtkopplungsmitteln bei Annäherung eines Objektes,
- Figur 4: eine Blockschaltung eines Verfahrens zur Ermittlung eines fremdlicht unabhängigen optischen Signals und
- Figur 5: eine weitere Blockschaltung eines Verfahrens zur Ermittlung eines fremdlicht unabhängigen optischen Signals.

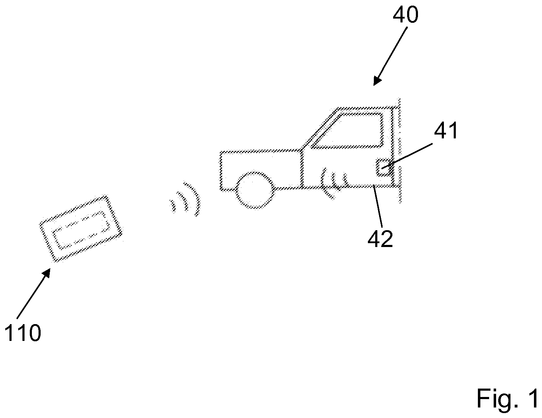

In Figur 1 ist rein schematisch ein mobiler Identifikationsgeber 110 dargestellt, der mit einer Sende- und Empfangseinheit 41 eines Kraftfahrzeuges 40 in Kommunikation steht. Der mobile Identifikationsgeber 110 weist unter anderem eine Elektronikeinheit auf, die mit einer Batterie als Energiespeicher versorgt wird.

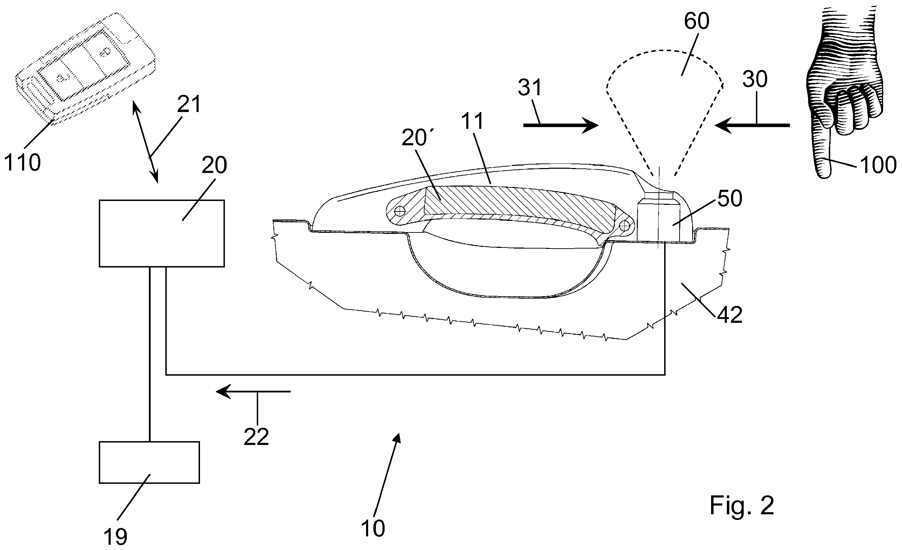

In Fig. 2 ist eine erfindungsgemäße Griffvorrichtung 10 dargestellt. Die Griffvorrichtung 10 ist an einem beweglichen Teil 42 - hier einer Tür eines Kraftfahrzeuges - angeordnet. Ein Teil der Griffvorrichtung 10 ist das Griffelement 11', an dem gezogen oder gedrückt werden kann, um den beweglichen Teil 42 zu Öffnen oder zu Schließen. Innerhalb des Griffelementes 11' ist ein Betätigungselement 50 angeordnet. Dieses Betätigungselement 50 überwacht optisch eine Betätigungszone 60, welche eine keulenartige dreidimensionale Form aufweist. An der erfindungsgemäßen Griffvorrichtung 10 kann eine elektrische und/oder mechanische Funktionsauslösung eines Schlosses 19 zum Öffnen oder Schließen des beweglichen Teils 42 erfolgen. Dazu ist vorgesehen, dass ein Objekt 100, wie etwa die Hand eines Benutzers, durch die Betätigungszone gefahren wird. Dadurch wird ein Signal 22 mittels des Betätigungselementes 50 ausgelöst. Voraussetzung dafür ist, dass die Bewegung des Objektes 100 einem vorgegebenen Bewegungsmuster 30 entspricht. So kann beispielsweise der Benutzer seine Hand über die Griffvorrichtung 10 in einer durch den Bewegungspfeil 30 vorgegebenen Richtung führen und dadurch ein Entriegeln des Schlosses auslösen. Voraussetzung ist, dass das Betätigungselement 50 erkennt, dass die vom Objekt 100 ausgeführte Bewegung dem vordefinierten Bewegungsmuster entspricht. Im Anschluss daran generiert das Betätigungselement 50 mittelbar und/oder unmittelbar das Signal 22. Dieses Signal 22 wird von einer Elektronikeinheit 20 empfangen. In Abhängigkeit von einer noch näher zu beschreibenden Identifizierungsabfolge gibt die Elektronikeinheit 20 ein Ent- oder Verriegelungssignal an ein Schloss 19. Je nach Ausgestaltung der Griffvorrichtung 10 kann die Elektronikeinheit 20 beispielsweise in einem weiteren Bereich des Kraftfahrzeuges 40 angeordnet sein. Denkbar ist es aber auch, dass die Elektronikeinheit 20' innerhalb des Griffelementes 11' der Griffvorrichtung eingelagert ist. Letztere Ausführungsvariante hat den Vorteil, dass die Kommunikationsstrecke zwischen dem Betätigungselement 50 und der Elektronikeinheit 20' sehr gering ist.

Zur optischen Überwachung der Betätigungszone 60 kann das Betätigungselement 50 zumindest einen Sensor aufweisen. Dieser Sensor umfasst wenigstens zwei Lichtquellen und mindestens einen Empfänger. Aus der Kombination der genannten Elemente kann ein Sensor geschaffen werden, der die Betätigungszone 60 optisch überwacht und Bewegungsmuster des Objektes 100 detektieren kann. Dazu kann in dem Betätigungselement 50 eine Rechnereinheit angeordnet sein, die Messergebnisse des Empfängers auswertet und aus den ausgewerteten Amplituden und/oder Phasen des empfangenen Lichtes das Bewegungsmuster 30 berechnet. Wie unter der Verwendung der noch folgenden Figuren beschrieben wird, gibt es unterschiedliche Anordnungen von Lichtquellen bzw. Empfängern um die erfindungsgemäß gewünschte Betätigungszone 60 optisch aufzuspannen, und Bewegungen 30 des Objektes 100 zu ermitteln.

Das erfindungsgemäße Betätigungselement 50 muss nicht darauf beschränkt sein, nur ein einziges Bewegungsmuster 30 zu erkennen. Beispielhaft ist in Fig. 2 dargestellt, dass ein zweites Bewegungsmuster 31 ebenfalls von dem Betätigungselement 50 erkannt wird. Bei dem zweiten Bewegungsmuster 31 handelt es sich ebenfalls um eine gegebenenfalls zwei- oder dreidimensionale Bewegung des Objektes 100 innerhalb der Betätigungszone 60. Je nachdem, ob das erste Bewegungsmuster 30 oder das zweite Bewegungsmuster 31 ausgeführt wird, generiert das Betätigungselement 50 ein Signal, respektive ein zweites Signal. Innerhalb der Elektronikeinheit 20, 20' können das Signal 22 und das zweite Signal 22' unterschiedliche Funktionen auslösen. So kann beispielsweise das Signal 22 zur Aktivierung eines Verriegelungsvorganges des beweglichen Teils 42 führen. Im Gegensatz dazu erzeugt die Generierung des zweiten Signales einen Entriegelungsvorgang des Schlosses 19, welches an dem beweglichen Teil 42 angeordnet ist. Diese Zuordnung unterschiedlicher Bewegungsmuster 30, 31 zu verschiedenen Aktionen hat den Vorteil, dass ein potenzieller Benutzer Funktionen des Schlosses 19 durch eindeutige Bewegungsmuster 30,31 an der Griffvorrichtung 10 auslösen kann. Insbesondere ist es ihm möglich, nach einem ersten Auslösen des Signales 22 durch das Bewegungsmuster 30 dieses ein wiederholtes Mal zu tun, um so persönliche Sicherheit zu erlangen, falls eine Unsicherheit aufgetreten ist, ob die gewünschte Handlung vorgenommen wurde. Dieses hat sich insbesondere bei modernen Passiv-Keyless-Entry-Systemen als vorteilhaft erwiesen.

In einer weiteren Ausführungsvariante kann die Griffvorrichtung 10 ein drittes Bewegungsmuster detektieren. Dieses dritte Bewegungsmuster kann beispielsweise in der Annäherung einer Person an ein Kraftfahrzeug 40 bestehen. Ein durch die optische Detektion des dritten Bewegungsmusters ausgelöstes drittes Signal veranlasst die Elektronikeinheit 20 und/oder ein Sicherheitssystem des Kraftfahrzeuges 40 zu einer Kommunikation mit einem mobilen Identifikationsgeber 110. Im Rahmen der folgenden Beschreibung soll angenommen werden, dass die Kommunikation zwischen der Elektronikeinheit 20 und dem mobilen Identifikationsgeber 110 durchgeführt wird. Genauso gut ist es aber auch möglich, den Dialog 21 zwischen dem mobilen Identifikationsgeber 110 und einem Sicherheitssystem des Kraftfahrzeuges auszuführen. Beide Varianten sind äquivalent. Im Rahmen des Dialoges 21 übersendet die Elektronikeinheit 20 zuerst ein Wecksignal an dem mobilen Identifikationsgeber 110. Dieses Wecksignal veranlasst den mobilen Identifikationsgeber 110 dazu, einen Codeschlüssel an die Elektronikeinheit 20 zu übersenden. Dieser Codeschlüssel wird von der Elektronikeinheit 20 ausgewertet, was im Allgemeinen einen Vergleich mit in der Elektronikeinheit 20 gespeicherten Daten voraussetzt. Wird im Rahmen der Auswertung festgestellt, dass der mobile Identifikationsgeber 110, berechtigt ist, das Kraftfahrzeug zu ver- oder entriegeln kann in der Elektronikeinheit 20 eine entsprechende Funktionsauslösung des Schlosses 19 ausgelöst werden. Voraussetzung für die tatsächliche Ent- bzw. Verriegelung des Schlosses 19 ist zusätzlich der Empfang des Signales 22 durch die Elektronikeinheit 20. Je nach Ausführungsvariante kann das Signal 22 vor oder nach einem Dialog 21 mit dem mobilen Identifikationsgeber 110 generiert werden. Erst die Kombination aus der Detektion des vorgegebenen Bewegungsmusters und der positiven Berechtigungsabfrage des mobilen Identifikationsgebers 110 führt zur tatsächlichen Auslösung des Ver- oder Entriegelungsvorgangs des Schlosses 19.

In einer weiteren Ausführungsvariante kann das Betätigungselement auch als ein dreidimensionale Bewegungen erfassender Detektor ausgestaltet sein. So könnte in dieser Ausführungsvariante eine streichende Bewegung über den mobilen Identifikationsgeber 110 im Bereich der Betätigungszone 60 zu einem Entriegelungsvorgang einer im Kraftfahrzeug integrierten Schließvorrichtung führen.

In einer nicht dargestellten Ausführungsvariante ist das Betätigungselement 50 innerhalb des Griffelementes 11' unter einem Abdeckelement angeordnet. Von dem Betätigungselement 50 wird in direkter oder indirekter Weise Licht abgestrahlt, welches die Betätigungszone 60 aufspannt. Um dieses zu ermöglichen, muss das Abdeckelement lichtdurchlässig ausgestaltet sein. Zusätzlich schützt das Abdeckelement das Betätigungselement 50 vor Umwelteinflüssen wie Feuchtigkeit oder Schmutz. In einer vorteilhaften Ausführungsvariante ist das Abdeckelement stoffschlüssig in das Griffelement 11' eingebracht.

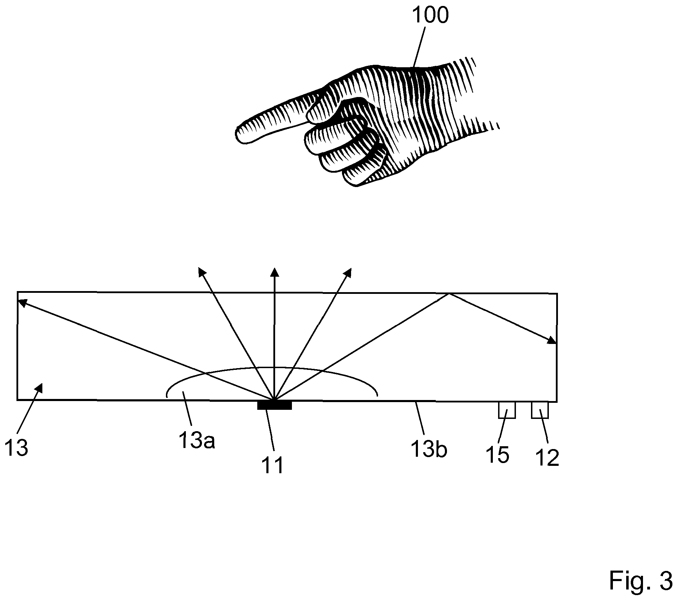

Die Figur 3 zeigt einen im Betätigungselement 50 integrierten Sensor zur optoelektronischen Erkennung der Bewegung und/oder der Position eines Objekts 100. Erkannt werden kann zum Beispiel die Annäherung eines Fingers an den mobilen Identifikationsgeber 110. Die Vorrichtung weist wenigstens ein Sendeelement 11 zum Aussenden von Strahlung im Wellenlängenbereich des Lichts von Infrarot bis Ultraviolett und wenigstens ein Empfangselement 12 zum Empfang zumindest eines Teils der vom Sendelement 11 ausgestrahlten und am Objekt 100 gestreuten Strahlung auf. Ferner ist im Strahlengang zwischen Sendeelement 11 und Empfangselement 12 ein Lichtleiter 13 angeordnet. Dieser Lichtleiter 13 besitzt selbst Lichtkopplungsmittel zum Einkoppeln für die am Objekt 100 diffus gestreute, zuvor durch den Lichtleiter 13 gestrahlte Strahlung, die am Objekt einer Winkeländerung unterworfen wurde. Die Strahlung wird vom Lichtkopplungsmittel 13a gemäß Fig. 3 dadurch eingekoppelt, dass das Lichtkopplungsmittel im Lichtleiter so geformt ist, dass quer zum Lichtleiter einfallende Strahlen ab einem bestimmten Winkel total reflektiert und anschließend im Lichtleiter weitergeleitet werden. Quer zum Lichtleiter eintreffendes Licht wird also je nach den optischen Eigenschaften des Lichtleiters nahezu im rechten Winkel umgeleitet.

Das Sendeelement 11 kann, wie in Fig. 3, quer durch den Lichtleiter durchstrahlen, so dass die Strahlung zunächst nicht in den Lichtleiter gelangt, da diese nicht der hierfür erforderlichen Totalreflexion unterliegt. Wird das Licht dann jedoch vom Objekt 100 rückgestreut, wird das rückgestreute Licht im Lichtleiter an den Lichtkopplungsmitteln 13a total reflektiert und anschließend im Lichtleiter "gefangen". Mit anderen Worten sind die Reflektionseigenschaften des Lichtleiters 13 und die Anordnung des Sendeelements gegenüber dem Lichtleiter so, dass das Sendeelement 11 das Licht im Wesentlichen durch den Lichtleiter leiten kann. Wird das Licht jedoch vom Objekt 100 auch nur mit einer geringen Winkeländerung diffus rückgestreut, wird im Ausführungsbeispiel eine Totalreflexion des "eingefangenen" Lichtstrahls möglich, so dass das Licht dann im Lichtleiter weiter geleitet werden kann. Das Sendeelement befindet sich dabei üblicherweise auf der Seite 13b des Lichtleiters, die von dem sich bewegenden und/oder annähernden Objekt 100 abgewandt ist. Dadurch ergibt sich nach außen eine geschlossene Oberfläche, rückseitig können jedoch alle mehr oder weniger empfindlichen Bauelemente angebracht sein.

Das Betätigungselement kann auch als eine Art Tastatur ausgeformt sein. Dazu weist der Lichtleiter 13 mehrere Lichtkopplungsmittel 13a auf. Vorzugsweise sind die Lichtkopplungsmittel 13a jeweils einem Sendeelement 11 räumlich zugeordnet, so dass die Sendelemente 11 in der Form einer Tastatur angeordnet sein können. An jeder der mehreren Taste befindet sich das zugeordnete Lichtkopplungsmittel 13a, das vorzugsweise bogen- oder kreissegmentförmig ausgebildet sein kann. Für jede Taste wird bevorzugt ein Sendeelement 11 in Form einer Leuchtdiode verwendet. Alle Sendeelemente 11 wirken durch eine geeignete Optik auf das Empfangselement 12, das zugleich von einer zusätzlichen Kompensations-LED 15 beleuchtet wird. Die Lichtkopplungsmittel 13a können zum Beispiel durch Einfräsung in den Lichtleiter 13 hergestellt werden. Da diese Einfräsung bzw. das Lichtkopplungsmittel 13a überhaupt nur zum Teil in den Lichtleiter 13 eindringt, kann im verbleibenden Lichtleiter reflektiertes Licht von jeder Tastenposition zum Empfangselement 12 gelangen. Vorzugsweise dringt das Lichtkopplungsmittel 13a nur zu etwa 50% in den Lichtleiter ein.

Grundsätzlich lassen sich Sendeelemente und Empfangselemente auch umkehren. So können z. B. den Tasten mehrere Empfangselemente, z. B. jeder Taste ein Empfangselement zugeordnet werden, während an geeigneter Stelle vorzugsweise wenigstens zwei Sendeelemente angeordnet werden. Es ist bei der Anordnung der Sendeelemente nur sicherzustellen, dass ein Lichtgang bis zu den Empfangselementen möglich ist.

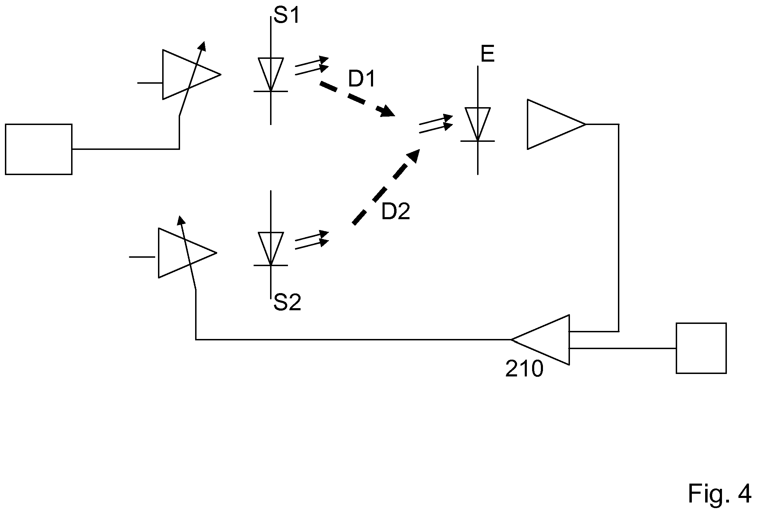

Um die Betätigungszone optisch zu überwachen, kann das Betätigungselement spezielle optische Verfahren anwenden. Insbesondere sollten Umwelteinflüsse nicht zu einer Beeinträchtigung einer Funktionsweise des Betätigungselementes führen. In Figur 4 senden zwei erste Lichtquellen S1, S2, hier LEDs, rechteckförmig moduliertes Licht im Gegentakt zum Empfänger E. Eine Sendeamplitude ist regelbar. Der Empfänger mit Bandpasscharakteristik verstärkt das Empfangssignal und führt es einem Regler 210 zu. Dieser Regler, in PI-Ausführung, stellt nun die Amplitude der regelbaren ersten Lichtquelle S1 so nach, dass das Wechselsignal am Empfängerausgang null wird. Der Regler 210 bewertet hierzu das Empfangssignal synchron zum Sendertakt, um so die Regelrichtung zu detektieren. Der Regler 210 zerfällt in zwei Teile: einer Detektion, welcher Sender stärker ist, und einem Integrator zur Erzeugung der Stellgröße.

Eine weitere Variante beruht auf der Beobachtung, dass zur Beurteilung, welcher Sender stärker sendet, es ausreichend ist, das Empfangssignal bezüglich der Phasenlage zu beurteilen. Eine zusätzliche Betrachtung der Amplitude ist grundsätzlich nicht erforderlich. Aufgrund dieser Erkenntnis lassen sich digitale Ausgestaltungen schnell und günstig realisieren, ohne dass es zu Fehlsignalen kommt. Dabei besteht sowohl die Möglichkeit, die so gewonnene Regelgröße als Licht über einen der Sender oder eine weitere Lichtquelle als Kompensationslichtquelle wieder in die Regelstrecke einzubringen, alternativ kann aber auch das so gewonnene Signal als Stromsignal am Empfänger hinzu addiert werden. Die zweite Alternative berücksichtigt zwar nicht sämtliche Störeinflüsse, die sich aufgrund der verwendeten Bauteile ergeben können, unter Umständen genügt jedoch eine derartige Lösung insbesondere für günstigere Ausführungsformen, bei denen es eventuell nicht auf eine vollständige Positions- oder Annäherungserkennung ankommt.

Zur Regelung der eingestrahlten Lichtintensität wird nicht mehr das Empfangssignal wie bei einer analogen Auswertung hinsichtlich seiner Amplitude beurteilt und bewertet, sondern stattdessen wird das Empfangssignal am Empfänger E bezüglich der Phasenlage bestimmt und damit eine Stellgröße erzeugt. Diese Stellgröße R kann entweder als Lichtsignal durch einen entsprechenden Strom an wenigstens eine der ersten Lichtquellen S1, S2 übermittelt werden, es ist jedoch ebenso möglich, das Ganze durch ein Stromsignal dem Empfänger durch Stromaddition zuzuleiten. Die weitere Lichtquelle, die die Lichtintensität regelt, kann insofern eine der ersten Lichtquellen S1, S2 sein. Alternativ kann es aber auch eine weitere Lichtquelle K sein, die dem Empfänger zugeordnet ist, wobei durch diese weitere Lichtquelle die Regelung so erfolgt, dass sie ihre Phase wechselt, indem diese weitere Lichtquelle über wenigstens ein ExOr-Gatter 21 oder wenigstens ein ExNor-Gatter angesteuert wird.

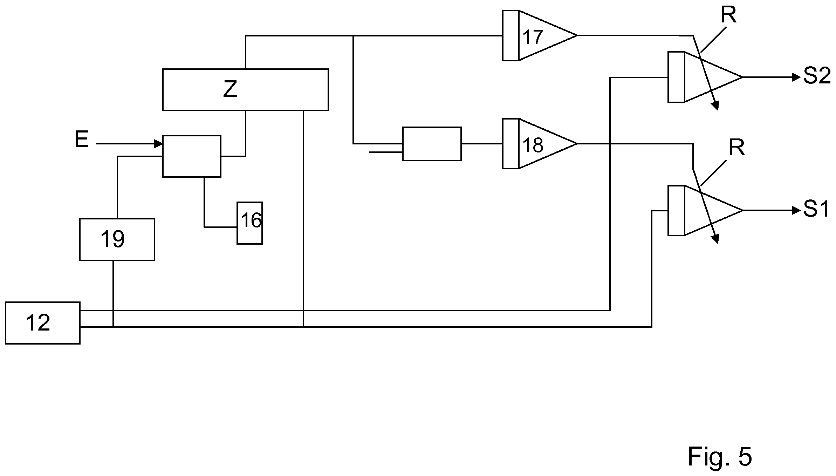

Die Implementierung kann gemäß Fig. 5 so erfolgen, dass das digitalisierte Empfangssignal der Datenleitung eines D-Flip-Flops 16 zugeführt wird. Der Takt für das Flip-Flop wird - bedarfsweise mittel Verzögerungsschaltung 19 verzögert - so aus dem Sendetakt des Taktgebers 12 abgeleitet, dass beispielsweise das Taktsignal von Sender S1 phasenrichtig und das von Sender S2 invertiert reproduziert wird. Diese so gespeicherten Werte dienen als Steuersignal für die Zählrichtung des Zählers Z. Der Zählerstand wird mittels eines DA-Umsetzers 17, 18 in die Sendeamplitude von beispielsweise Sender S2 umgesetzt. Bei Bedarf wird die Sendeleistung von Sender S1 mit dem invertierten Zählerstand oder dem invertierten DA-Umsetzer-Ergebnis angesteuert.

Zur Detektion einer Bewegung in der Betätigungszone können zwei Messstrecken zwischen Sendelement und Empfangselement aufgebaut werden. Während das Sendeelement die Strahlung aussendet, ermittelt das Empfangselement die an dem Objekt reflektierte Rückstrahlung. Die beiden Messstrecken werden über einen Taktgenerator zeitabschnittsweise betrieben. Dabei sind die Taktsignale über einen Multiplexer geleitet, um insbesondere bei einer Tastatur weitere Sendeelemente anzusteuern. Die vom Empfangselement bestimmten Detektionssignale werden gefiltert und in einem vom Taktgenerator angesteuerten Synchrondemodulator wieder in den einzelnen Messstrecken zuordenbare Signale zerlegt. Das durch Vergleichen der Messstrecken ermittelte Nutzsignal wird einer Auswerteeinheit zugeleitet, die in Abhängigkeit davon das Signal in dem mobilen Identifikationsgeber schaltet.

Findet auf beiden Messstrecken eine gleichmäßige Reflexion statt, so ergibt sich ein Nutzsignal zu Null. Das Nutzsignal wird einer Signalzentrierstufe zugeführt. Je nachdem, ob an deren Ausgang eine Regelspannung anliegt oder nicht, wird mit dieser Regelspannung dann die in die Messstrecken eingestrahlte Strahlungsmenge geregelt, so dass sich in Abhängigkeit einer Zeitkonstante eine Rückregelung des Detektionssignals ergibt. Dies erfolgt über die Kompensations-LED, die mit dem gegenphasigen Taktsignal betrieben und aufgrund des Nutzsignals am Regler geregelt wird. Damit ist es möglich, dynamische Änderungen zu erfassen, wobei gleichzeitig eine zuverlässige Fremdlichtkompensation stattfindet.

Als Kompensations-LED kann eine Leuchtdiode vorgesehen sein, die entsprechend geregelt bedarfsweise auch im Dauerbetrieb gehalten wird und mit einer taktabhängigen Strahlungsleistung in Abhängigkeit der zur Kompensation des jeweils gerade getakteten Sendeelements erforderlichen Kompensation betrieben wird.

### Bezuqszeichen

- 10: Griffvorrichtung
- 11': Griffelement
- 11: Sendeelement
- 12: Empfangselement
- 13: Lichtleiter
- 13a: Lichtkopplungsmittel
- 15: Kompensations-LED
- 19: Schloss

- 20,20': Elektronikeinheit
- 21: Dialog
- 22: Signal

- 30: Bewegungsmuster
- 31: zweites Bewegungsmuster

- 40: Kraftfahrzeug
- 42: beweglicher Teil

- 50: Betätigungselement

- 60: Betätigungszone

- 70: Abdeckelement

- 100: Objekt
- 110: mobiler Identifikationsgeber
- 210: Regler

## Patentansprüche

1. Griffvorrichtung (10) zur Funktionsauslösung eines Schlosses (19) zum Öffnen und/oder Schließen eines beweglichen Teils (42), insbesondere einer Tür, einer Heckklappe oder dergleichen eines Kraftfahrzeugs (40),
mit einer Elektronikeinheit (20,20') und einem Betätigungselement, wobei die Elektronikeinheit (20,20') zur Datenkommunikation mit einem fahrzeugseitigen Teil, insbesondere einem Sicherheitssystem dient,
das Betätigungselement eine Betätigungszone (60) überwacht,
eine Auslösung eines Signals mittels des Betätigungselements durch eine Bewegung eines Objektes (100) innerhalb der Betätigungszone (60) erfolgt, wobei das Betätigungselement die Betätigungszone (60) optisch derart überwacht, dass eine Erfassung eines vorgegebenen Bewegungsmusters (30) durch eine Bewegung des Objektes (100) zur Auslösung des Signals führt, wobei ein zweites Bewegungsmuster ein zweites Signal auslöst, wobei in dem Bewegungsmuster (30) das Objekt in einer ersten Richtung durch die Betätigungszone (60) bewegt wird und in dem zweiten Bewegungsmuster (31) das Objekt in einer zweiten Richtung durch die Betätigungszone (60) bewegt wird, und wobei die erste Richtung und die zweite Richtung entgegengesetzt sind, wobei zur Aktivierung des Verriegelungsvorgangs das Objekt gemäß dem Bewegungsmuster (30) in der ersten Richtung durch die Betätigungszone (60) bewegt wird und zur Aktivierung des Entriegelungsvorgangs das Objekt gemäß dem zweiten Bewegungsmuster (31) in der zweiten Richtung durch die Betätigungszone (60) bewegt wird, **dadurch gekennzeichnet,**
**dass** das Betätigungselement (50) in einem Gehäuse angeordnet ist, wobei ein Abdeckelement das Betätigungselement (50) überdeckt, wobei das Abdeckelement lichtdurchlässig ist, und wobei das Abdeckelement stoffschlüssig mit dem Gehäuse verbunden ist.

2. Griffvorrichtung nach Anspruch 1,
**dadurch gekennzeichnet,**
**dass** das vorgegebene Bewegungsmuster (30) eine zumindest zweidimensionale Bewegung des Objektes in der Betätigungszone (60) ist.

3. Griffvorrichtung (10) nach Anspruch 1 oder 2,
**dadurch gekennzeichnet,**
**dass** mittels des Betätigungselements (50) eine schlüssellose Aktivierung eines Ver- und Entriegelungsvorgangs einer Schließvorrichtung auslösbar ist, insbesondere dass die schlüssellose Aktivierung berührungslos innerhalb der Betätigungszone (60) auslösbar ist.

4. Griffvorrichtung (10) nach einem der vorhergehenden Ansprüche,
**dadurch gekennzeichnet,**
**dass** das Signal das Öffnen und/oder Schließen des beweglichen Teils (42) auslöst, insbesondere das Signal das Öffnen und/oder Schließen einer Tür, einer Heckklappe oder dergleichen eines Kraftfahrzeugs (40) auslöst.

5. Griffvorrichtung (10) nach einem der vorhergehenden Ansprüche,
**dadurch gekennzeichnet,**
**dass** je nach vorgegebenem Bewegungsmuster (30) das Betätigungselement (50) als ein Taster, ein Schieberegler, ein Annäherungsdetektor, ein Bewegungsdetektor und/oder ein dreidimensionale Bewegungen erfassender Detektor dient.

6. Griffvorrichtung (10) nach einem der vorhergehenden Ansprüche,
**dadurch gekennzeichnet,**
**dass** die Betätigungszone (60) eine optisch überwachte dreidimensionale Zone ist, insbesondere dass das Betätigungselement (50) einen Sensor aufweist, besonders bevorzugt dass der Sensor optoelektronisch ausgestaltet ist, insbesondere dass der Sensor mindestens einen Lichtsender und wenigstens einen Lichtempfänger aufweist, wobei mittels des Sensors das Bewegungsmuster (30) des Objektes (100) in der Betätigungszone (60) bestimmbar ist, wobei insbesondere der Lichtsender eine Leuchtdiode (LEDs), eine Organische Leuchtdiode (OLEDs) oder Laserdiode ist, insbesondere dass der Lichtsender ein infrarotes Licht emittiert.

7. Griffvorrichtung (10) nach einem der vorhergehenden Ansprüche,
**dadurch gekennzeichnet,**
**dass** das Objekt (100) eine menschliche Hand, ein menschlicher Finger oder ein mechanisches Bauteil ist.

8. Griffvorrichtung (10) nach einem der vorhergehenden Ansprüche,
**dadurch gekennzeichnet,**
**dass** das Abdeckelement lichtdurchlässig für die von dem Lichtsender emittierte Wellenlänge ist, besonders bevorzugt dass die Betätigungszone (60) oberhalb einer dem Objekt (100) zugewandten Außenseite des Abdeckelementes angeordnet ist.

9. Griffvorrichtung (10) nach Anspruch 8,
**dadurch gekennzeichnet,**
**dass** die Betätigungszone (60) oberhalb einer dem Objekt (100) zugewandten Außenfläche des Gehäuses angeordnet ist, insbesondere dass die Betätigungszone (60) eine tropfenartige Form aufweist.

10. Griffvorrichtung (10) nach einem der Ansprüche 6 bis 9,
**dadurch gekennzeichnet,**
**dass** der Sensor mindestens eine optoelektronische Messvorrichtung mit wenigstens fünf Lichtsendern und wenigstens einem Lichtempfänger enthält.

11. Griffvorrichtung (10) nach einem der Ansprüche 6 bis 9,
**dadurch gekennzeichnet,**
**dass** der Sensor mindestens eine optoelektronische Messvorrichtung mit wenigstens zwei Lichtsendern und wenigstens einem Lichtempfänger enthält, wobei den Lichtsendern Erfassungskeulen zugeordnet sind, die eine innerhalb der Betätigungszone (60) liegende entfernte Zone und eine nähere Zone definieren, und dass das Betätigungselement (50) ferner eine Auswerteeinheit aufweist, wobei die Auswerteeinheit eine Auslösung des Signals ausgehend von einer Bewegung des Objektes (100) aus einer Position in der entfernten Zone in einer vorbestimmten Richtung in die nähere Zone auslöst.

12. Griffvorrichtung (10) nach einem der Ansprüche 6 bis 11,
**dadurch gekennzeichnet,**
**dass** der Sensor ein HALIOS® Baustein ist.

13. Griffvorrichtung (10) nach einem der vorhergehenden Ansprüche,
**dadurch gekennzeichnet,**
**dass** das Betätigungselement (50) wenigstens einem Sendeelement (11) für Strahlung im Wellenlängenbereich des Lichts und wenigstens einem Empfangselement (12) zum Empfang zumindest eines Teils der vom Sendelement (11) ausgestrahlten und vom Objekt (100) rückgestrahlten Strahlung sowie mit einem im Strahlengang zwischen Sendeelement (11) und Empfangselement (12) angeordneten Lichtleiter (13) aufweist, wobei der Lichtleiter (13) selbst Lichtkopplungsmittel zum Einkoppeln für die am Objekt (100) diffus gestreute, zuvor durch den Lichtleiter (13) gestrahlte Strahlung aufweist, wobei insbesondere die Lichtkopplungsmittel (13a) das vom Objekt (100) quer zur Längserstreckung des Lichtleiters (13) gestreute Licht in den Lichtleiter (13) einkoppeln.

14. Griffvorrichtung (10) nach einem der vorhergehenden Ansprüche,
**dadurch gekennzeichnet,**
**dass** das Betätigungselement (50) eine Anordnung zum Messen oder Erkennen einer Veränderung an einem rückstrahlenden Element oder infolge eines rückstrahlenden Elements aufweist, wobei die Anordnung zum Messen oder Erkennen einer Veränderung an einem rückstrahlenden Element oder infolge eines rückstrahlenden Elements, das von der Anordnung durch ein für eine bestimmte Strahlung durchlässiges Medium getrennt ist, mit
- einem sensoraktiven Bereich im Medium mit wenigstens zwei Messstrecken mit zugeordneten Strahlungsquellen zum Einstrahlen der bestimmten Strahlung in das strahlungsdurchlässige Medium und mit wenigstens einem Strahlungsempfänger, wobei der Strahlungsempfänger im Überlappungsbereich der Zonen eines Maximums des Strahlungsstärkeverlaufes bei dem im Ruhestand befindlichen sensoraktivem Bereich aus der dem rückstrahlenden Element gegenüberliegenden Seite des Mediums austretenden Rückstrahlung der dem Strahlungsempfänger zugeordneten Strahlungsquellen zur Erzeugung eines der empfangenen Strahlung entsprechenden Detektionssignales angeordnet ist,
- einer Schalteranordnung zu einem zeitabschnittsweisen Wirksamschalten jeder der einzelnen Messstrecken in einer aufeinanderfolgenden, sich wiederholenden Schaltfolge einer bestimmten Schaltfolgefrequenz,
- einer Einstellanordnung zur Einstellung einer derart bemessenen Strahlungsleistung der jeweiligen Messtrecke zugeordneten Strahlungsquelle, dass bei im Ruhestand befindlichen sensoraktivem Bereich jede Messtrecke einen Abschnitt des Detektionssignales erzeugt, dessen mittlerer Amplitudenwert gleich dem mittleren Amplitudenwert der der wenigstens einen anderen Messstrecke zugeordneten Abschnitte des Detektionssignales ist
- einer dem Strahlungsempfänger nachgeschalteten Filterschaltung zur Übertragung des auf eine Schwingung der Schaltfolgefrequenz modulierten Detektionssignales an eine Auswerteanordnung zur Erzeugung eines Steuer- und/oder Messwertsignales aus dem in der Auswerteanordnung gemessenen oder festgestellten Unterschied der den einzelnen Messstrecken zugeordneten Abschnitte des Detektionssignales, wobei insbesondere die wenigstens zwei Meßstrecken durch wenigstens einen Lichtsender und mehrere Lichtempfänger gebildet sind.

15. Verfahren zur berührungslosen Auslösung eines Signals an einer Griffvorrichtung (10) wobei
die Griffvorrichtung (10) zur Funktionsauslösung eines Schlosses (19) zum Öffnen und/oder Schließen eines beweglichen Teils (42), insbesondere einer Tür, einer Heckklappe oder dergleichen eines Fahrzeugs dient,
die Griffvorrichtung (10) eine Elektronikeinheit (20,20') und ein Betätigungselement aufweist,
die Elektronikeinheit (20,20') zur Datenkommunikation mit einem fahrzeugseitigen Teil, insbesondere eines Sicherheitssystems dient,
eine Betätigungszone (60) mittels des Betätigungselementes überwacht wird, und
mittels des Betätigungselements ein Signal durch eine Bewegung eines Objektes (100) innerhalb der Betätigungszone (60) ausgelöst wird, wobei die Betätigungszone (60) durch das Betätigungselement optisch überwacht wird, und
durch eine Erfassung eines vorgegebenen Bewegungsmusters durch eine Bewegung des Objektes (100) das Signal ausgelöst wird, wobei ein zweites Bewegungsmuster ein zweites Signal auslöst, wobei in dem Bewegungsmuster (30) das Objekt in einer ersten Richtung durch die Betätigungszone (60) bewegt wird und in dem zweiten Bewegungsmuster (31) das Objekt in einer zweiten Richtung durch die Betätigungszone (60) bewegt wird, und wobei die erste Richtung und die zweite Richtung entgegengesetzt sind, wobei zur Aktivierung des Verriegelungsvorgangs das Objekt gemäß dem Bewegungsmuster (30) in der ersten Richtung durch die Betätigungszone (60) bewegt wird und zur Aktivierung des Entriegelungsvorgangs das Objekt gemäß dem zweiten Bewegungsmuster (31) in der zweiten Richtung durch die Betätigungszone (60) bewegt wird, **dadurch gekennzeichnet,**
**dass** das Betätigungselement (50) in einem Gehäuse angeordnet wird, wobei ein Abdeckelement das Betätigungselement (50) überdeckt, wobei das Abdeckelement lichtdurchlässig ist, und wobei das Abdeckelement stoffschlüssig mit dem Gehäuse verbunden ist.

16. Verfahren nach Anspruch 15,
**dadurch gekennzeichnet,**
**dass** das Bewegungsmuster (30) eine zumindest zweidimensionale Bewegung des Objektes in der Betätigungszone (60) beinhaltet, insbesondere dass das Bewegungsmuster (30) eine zumindest dreidimensionale Bewegung des Objektes in der Betätigungszone (60) beinhaltet.

17. Verfahren nach einem der Ansprüche 15 oder 16,
**dadurch gekennzeichnet,**
**dass** durch das Ausführen des Bewegungsmusters (30) eine schlüssellose Aktivierung eines Ver- und Entriegelungsvorgangs einer Schließvorrichtung ausgelöst wird, insbesondere dass die schlüssellose Aktivierung berührungslos innerhalb der Betätigungszone (60) ausgelöst wird.

18. Verfahren nach einem der Ansprüche 15 oder 17,
**dadurch gekennzeichnet,**
**dass** zur Aktivierung des Entriegelungsvorgang ein gradliniges Bewegungsmuster ausgeführt wird, insbesondere dass zur Aktivierung des Entriegelungsvorgangs ein Benutzer über die Betätigungszone (60) streicht und/oder dass das Bewegungsmuster (30) als ein Ver- oder Entriegelungsvorgang der Schließvorrichtung auf einem Display angezeigt wird.

19. Verfahren nach einem der Ansprüche 15 bis 18,
**dadurch gekennzeichnet,**
**dass** eine Berechtigungsabfrage zur Aktivierung des Entriegelungs- und/oder Verriegelungsvorgangs durchgeführt wird, insbesondere die Berechtigungsabfrage nach der Auslösung des Signals durchgeführt wird, besonders bevorzugt dass ein mobiler Identifikationsgeber mit der Elektronikeinheit (20,20') einen Dialog (21) nach Auslösung des Signals durchführt, besonders bevorzugt dass die Berechtigung im Rahmen des Dialogs (21) überprüft wird, wobei insbesondere bei einem positiven Ergebnis der Berechtigungsabfrage die Aktivierung des Entriegelungs- und/oder Verriegelungsvorgangs durchgeführt wird.

20. Verfahren nach einem der Ansprüche 15 bis 19,
**dadurch gekennzeichnet,**
**dass** das Betätigungselement (50) einen Sensor aufweist und der Sensor wenigstens zwei erste Lichtquellen (S1, S2), die Licht zeitsequenziell getaktet, phasenweise aussenden, und wenigstens einem Empfänger (E) zum Empfang zumindest des von den ersten Lichtquellen (S1, S2) stammenden, taktsynchronen Wechsellichtanteils, aufweist, wobei insbesondere der Sensor eine durch wenigstens eine Lichtquelle (S1, S2) eingestrahlte Lichtintensität so regelt, dass ein taktsynchroner Wechsellichtanteil, der zwischen verschiedenen Phasen auftritt, am Empfänger (E) zu Null wird und zur Regelung der eingestrahlten Lichtintensität ein Empfangssignal am Empfänger (E) bezüglich der Phasenlage bestimmt wird und damit eine Stellgrösse erzeugt wird.

21. Verfahren nach einem der Ansprüche 15 bis 20,
**dadurch gekennzeichnet,**
**dass** zur Erkennung eines Bewegungsmusters (30) mit Griffvorrichtung (10) nach einem der vorhergehenden Ansprüche mit den Schritten:
- Aussenden einer Strahlung im Wellenlängenbereich des Lichts,
- Durchstrahlen des Lichts durch einen Lichtleiter (13) bis zum Objekt (100),
- Rückstrahlen zumindest eines Teils des Lichts vom Objekt (100) und Rückkoppeln des rückgestrahlten Lichts in den Lichtleiter (13),
- Empfangen des rückgestrahlten Lichts unter Bildung eines Eingangssignals,
- Auswerten des Eingangssignals zur Bestimmung der Bewegung und/oder Position des Objekts (10),
- Einkoppeln des diffus rückgestreuten Lichts über Lichtkopplungsmittel (13a) des Lichtleiters (13) selbst in den Lichtleiter, wobei insbesondere die Lichtkopplungsmittel (13a) das vom Objekt (100) rückgestreute Licht quer zur Längserstreckung des Lichtleiters (13) in den Lichtleiter einkoppeln.

22. Verfahren nach Anspruch 21,
**dadurch gekennzeichnet,**
**dass** die vom Sendeelement (11) durch den Lichtleiter (13) gestrahlte Strahlung ausgehend von der dem Objekt (100) gegenüberliegenden Seite (13b) quer durch den Lichtleiter (13) gestrahlt wird, bevor sie vom Objekt (100) rückgestreut wird oder dass die vom Sendeelement (11) entlang des Lichtleiters (13) gestrahlte Strahlung von den Lichtkopplungsmitteln (13a) zumindest teilweise aus dem Lichtleiter (13) ausgekoppelt wird, bevor sie vom Objekt (100) gestreut wird.

## Claims

1. Handle device (10) for function initiation of a lock (19) for opening and/or closing of a moving part (42), especially a door, trunk lid or the like of a vehicle (40),
with an electronic unit (20, 20') and an operating device,
in which the electronic unit (20, 20') serves for data communication with a part of a vehicle site, especially a security system,
the operating device monitors an operating zone (60),
tripping of a signal occurs by means of the operating device through a movement of an object (100) within the operating zone (60), wherein the operating device optically monitors the operating zone (60), so that a recording of a stipulated movement pattern (30) through movement object (100) leads to tripping of the signal, wherein a second movement pattern initiates a second signal, wherein the object is moved in the movement pattern (30) in a first direction through operating zone (60) and in the second operating pattern (31), the object is moved in the second direction through the operating zone (60), and wherein the first direction and the second direction are opposite, wherein for activation of the locking process, the object is moved according to the movement pattern (30) in a first direction through operating zone (60) and for operation of the unlocking process, the object is moved according to the second movement pattern (31) in the second direction through the operating zone (60),
**characterized in that**
the operating device (50) is arranged in a housing, wherein a cover element (70) covers the operating device (50), wherein the cover element (70) is transparent and wherein the cover element (70) is materially bonded to the housing.

2. Method according to Claim 1,
**characterized in that**
that the stipulated movement pattern (30) is an at least two-dimensional movement of the object in the operating zone (60).

3. Handle device (10) according to Claim 1 or 2,
**characterized in that**
that a keyless activation of a locking and unlocking device of a lock can be initiated by means of the operating device (50), especially that keyless activation can be initiated in contactless fashion within the operating zone (60).

4. Handle device (10) according to one of the preceding claims,
**characterized in that**
that the signal initiates the opening and/or the closing of the moving part (42), especially that the signal initiates the opening and/or the closing of a door, a trunk lid or the like of a vehicle (40).

5. Handle device (10) according to one of the preceding claims,
**characterized in that**
that depending on the stipulated movement pattern (30), the operating device (50) serves as a push button, a slider, a proximity detector, a motion detector and/or a detector that records three-dimensional movements.

6. Handle device (10) according to one of the preceding claims,
**characterized in that**
that the operating zone (60) is an optically monitored three-dimensional zone, especially that the operating device (50) has a sensor, with particular preference that the sensor is configured optoelectronically, especially that the sensor has at least one light transmitter and at least one light receiver, in which the movement pattern (30) of object (100) in the operating zone (60) can be determined by means of the sensor, wherein in particular the light transmitter is a light-emitting diode (LED), an organic light-emitting diode (OLED) or a laser diode, especially that the light transmitter emits infrared light

7. Handle device (10) according to one of the preceding claims,
**characterized in that**
that the object (100) is a human hand, a human finger or a mechanical component.

8. Handle device (10) according to any of the preceding claims,
**characterized in that**
that the cover element (70) is transparent for the wavelength emitted by the light transmitter, with particular preference that the operating zone (60) is arranged above and outside of the cover element facing the object (100).

9. Handle device (10) according to Claim 8,
**characterized in that**
that the operating zone (60) is arranged above an outer surface of the housing facing object (100), especially that the operating zone (60) has a drop-like shape.

10. Handle device (10) according to one of the Claims 6 to 9,
**characterized in that**
that the sensor contains at least one optoelectronic measurement device with at least five light transmitters and at least one light receiver.

11. Handle device (10) according to one of the Claims 6 to 9,
**characterized in that**
that the sensor contains at least one optoelectronic measurement device with at least two light transmitters and at least one light receiver, in which recording lobes are assigned to the light transmitters that define a far zone lying within the operating zone (60) and a near zone, and that the operating device (50) also has an evaluation unit, in which the evaluation unit trips the signal, starting from a movement of the object (100) from a position in the far zone in a predetermined direction into the near zone.

12. Handle device (10) according to one of the Claims 6 to 11,
**characterized in that**
that the sensor is a HALIOS® component.

13. Handle device (10) according to one of the preceding claims,
**characterized in that**
that the operating device (50) has at least one transmitting element (11) for radiation in the wavelength range of light and at least one receiving element (12) to receive at least part of the radiation emitted by the transmitting element (11) and back-radiated from the object (100), and with a light guide (13) arranged in the beam path between the transmitting element (11) and receiving element (12), in which the light guide (13) itself has light-coupling means to couple radiation diffusely scattered on the object (10) and introduced beforehand through light guide (13), wherein in particular the light-coupling devices (13a) couple the light scattered by the object (100) across the longitudinal extent of light guide (13) into the light guide (13).

14. Handle device (10) according to one of the preceding claims,
**characterized in that**
that the operating device (50) has an arrangement for measurement or recognition of a change on or as a result of a back-radiating element, in which the arrangement for measurement or recognition of a change on or as a result of a back-radiating element, which is separated from the arrangement by a medium transparent for a certain radiation, has
- a sensor-active region in the medium with at least two measurement zones with coordinated radiation sources for introduction of the specified radiation into the radiation-transparent medium and with at least one radiation receiver, in which the radiation receiver is arranged in the overlapping region of the zones of maximum radiation intensity in the sensor-active region situated in a state of rest of the back-radiation emerging from the side of the medium opposite the back-radiating element of radiation sources assigned to the radiation receiver in order to generate a detection signal corresponding to the received radiation,
- a switch arrangement for timed activation of each of the individual measurement zones in a consecutive, repeating switching sequence with a certain switching sequence frequency,
- an adjustment arrangement to adjust a measured radiation power of the radiation source assigned to the corresponding measurement zone, so that in the sensor-active region situated in a state of rest, each measurement zone produces a section of the detection signal, whose average amplitude value is equal to the average amplitude value of the section of the detector signal assigned to at least one other measurement zone,
- a filter circuit connected after the radiation receiver to transmit the detection signal modulated on an oscillation of the switching sequence frequency to an evaluation arrangement to generate a control and/or a measured value signal from the difference measured in the evaluation arrangement or determined in it of the sections of the detection signal assigned to individual measurement zones, wherein in particular the at least two measurement zones are formed by at least one light transmitter and several light receivers.

15. Method for contactless tripping of a signal on a handle device (10), in which
the handle device (10) serves for function initiation of a lock (19) for opening and/or closing of a moving part (42), especially a door, a trunk lid or the like of a vehicle,
the handle device (10) has an electronic unit (20, 20') and an operating device,
the electronic unit (20, 20') serves for data communication with a part on the vehicle side, especially a security system,
an operating zone (60) is monitored by the operating device, and
a signal is tripped by the operating device by movement of an object (100) within the operating zone (60), wherein the operating zone (60) is optically monitored by the operating device, and by recording of a stipulated movement pattern, the signal is tripped by movement of object (100), wherein a second movement pattern initiates a second signal, wherein the object is moved in the movement pattern (30) in a first direction through operating zone (60) and in the second operating pattern (31), the object is moved in the second direction through the operating zone (60), and wherein the first direction and the second direction are opposite, wherein for activation of the locking process, the object is moved according to the movement pattern (30) in a first direction through operating zone (60) and for operation of the unlocking process, the object is moved according to the second movement pattern (31) in the second direction through the operating zone (60)
**characterized in that**
the operating device (50) is arranged in a housing, wherein a cover element (70) covers the operating device (50), wherein the cover element (70) is transparent and wherein the cover element (70) is materially bonded to the housing.

16. Method according to Claim 15,
**characterized in that**
that the movement pattern (30) includes at least two-dimensional movement of the object in the operating zone (60), especially that the movement pattern (30) includes at least three-dimensional movement of the object from the operating zone (60).

17. Method according to one of the Claims 15 or 16,
**characterized in that**
that by execution of the movement pattern (30), keyless activation of a locking and unlocking process of a lock is initiated, especially that keyless activation is initiated in contactless fashion within the operating zone (60).

18. Method according to one of the Claims 15 to 17,
**characterized in that**
that for activation of the unlocking process, a linear movement pattern is executed, especially that a user swipes over the operating zone (60) to activate the unlocking process and/or that the movement pattern (30) of a locking or unlocking process of the lock is displayed on a display.

19. Method according to one of the Claims 15 to 18,
**characterized in that**
that an authorization query for activation of the unlocking and/or locking process is carried out, especially the authorization query is carried out after tripping of the signal, with particular preference that a mobile identification transmitter carries out a dialog (21) with the electronic unit (20, 20') after tripping of the signal, with particular preference that authorization is checked within the context of dialog (21), wherein in particular in case of a positive result of the authorization query, activation of the unlocking and/or locking process is carried out.

20. Method according to one of the Claims 15 to 19,
**characterized in that**
that the operating device (50) has a sensor and the sensor has at least two first light sources (S1, S2), which emit light in phases sequentially timed, and at least one receiver (E) to receive at least the alternating light fraction originating from the first light sources (S1, S2) synchronized in time, wherein in particular the sensor controls a light intensity emitted through at least one light source (S1, S2), so that a time-synchronized alternating light fraction that occurs between different phases becomes zero on receiver (E) and a received signal is determined on receiver (E) with reference to phase position to control the emitted light intensity and a control quantity generated with it.

21. Method according to one of the Claims 15 to 20,
**characterized in that**
for recognition of a movement pattern (30) with handle device (10) according to one of the preceding claims with the steps:
- Emission of radiation in the wavelength range of the light,
- Passage of the light through a light guide (13) to the object (100),
- Back-radiation of at least part of the light from the object (100) and back-coupling of the back-radiated light into light guide (13),
- Receiving of the back-radiated light to form an input signal,
- Evaluation of the input signal to determine the movement and/or position of object (10),
- The diffusely back-scattered light via light-coupling devices (13a) of the light guide (13) itself is coupled into the light guide, wherein in particular the light-coupling devices (13a) couple the light back-scattered from object (100) into the light guide across the longitudinal extent of the light guide (13).

22. Method according to Claim 21,
**characterized in that**
that the radiation emitted by the transmitting element (11) through the light guide (13), starting from the side (13b) opposite object (100), is sent transversely through light guide (13) before it is back-scattered by object (100) or that the radiation emitted from the transmitting element (11) along light guide (13) is decoupled by the light-coupling devices (13a) at least partially from the light guide (13) before it is scattered by object (100).

## Revendications

1. Dispositif de poignée (10) servant au déclenchement fonctionnel d'une serrure (19) servant à ouvrir et/ou à fermer d'une partie (42) mobile, en particulier d'une porte, un hayon ou similaire d'un véhicule automobile (40),
avec une unité électronique (20, 20') et un élément d'actionnement, dans lequel l'unité électronique (20, 20') sert à la communication de données avec une partie côté véhicule, en particulier avec un système de sécurité,
l'élément d'actionnement surveille une zone d'actionnement (60),
un déclenchement d'un signal est effectué au moyen de l'élément d'actionnement par un mouvement d'un objet (100) à l'intérieur de la zone d'actionnement (60),
dans lequel
l'élément d'actionnement surveille la zone d'actionnement (60) de manière optique de telle manière qu'une détection d'un schéma de mouvement (30) spécifié, par un déplacement de l'objet (100) résulte en le déclenchement du signal,
dans lequel un deuxième schéma de mouvement déclenche un deuxième signal, dans lequel dans le schéma de mouvement (30), l'objet est déplacé dans une première direction à travers la zone d'actionnement (60) et dans le deuxième schéma de mouvement (31), l'objet est déplacé dans une deuxième direction à travers la zone d'actionnement (60), et dans lequel la première direction et la deuxième direction sont opposées,
dans lequel
pour l'activation de l'opération de verrouillage, l'objet est déplacé selon le schéma de mouvement (30) dans la première direction à travers la zone d'actionnement (60) et pour l'activation de l'opération de déverrouillage, l'objet est déplacé selon le deuxième schéma de mouvement (31) dans la deuxième direction à travers la zone d'actionnement (60),
**caractérisé en ce que**
l'élément d'actionnement (50) est disposé dans un boîtier, dans lequel un élément de recouvrement recouvre l'élément d'actionnement (50), dans lequel l'élément de recouvrement est perméable à la lumière et dans lequel l'élément de recouvrement est relié par liaison de matière au boîtier.

2. Dispositif de poignée selon la revendication 1,
**caractérisé en ce que**
le schéma de mouvement (30) spécifié est un déplacement au moins bidimensionnel de l'objet dans la zone d'actionnement (60).

3. Dispositif de poignée (10) selon la revendication 1 ou 2,
**caractérisé en ce qu'**
une activation sans clé d'une opération de verrouillage et de déverrouillage d'un dispositif de fermeture peut être déclenchée au moyen de l'élément d'actionnement (50), en particulier que l'activation sans clé peut être déclenchée sans contact au sein de la zone d'actionnement (60).

4. Dispositif de poignée (10) selon l'une quelconque des revendications précédentes,
**caractérisé en ce que**
le signal déclenche l'ouverture et/ou la fermeture de la partie (42) mobile, en particulier le signal déclenche l'ouverture et/ou la fermeture d'une porte, d'un hayon ou similaire d'un véhicule automobile (40).

5. Dispositif de poignée (10) selon l'une quelconque des revendications précédentes,
**caractérisé en ce que**
en fonction du schéma de mouvement (30) spécifié, l'élément d'actionnement (50) sert comme bouton-poussoir, de curseur de réglage, de détecteur de proximité, de détecteur de mouvement et/ou de détecteur détectant des mouvements tridimensionnels.

6. Dispositif de poignée (10) selon l'une quelconque des revendications précédentes,
**caractérisé en ce que**
la zone d'actionnement (60) est une zone tridimensionnelle surveillée de manière optique, en particulier que l'élément d'actionnement (50) présente un capteur, de manière particulièrement préférée que le capteur est configuré de manière optoélectronique, en particulier que le capteur présente au moins un émetteur de lumière et au moins un récepteur de lumière, dans lequel le schéma de mouvement (30) de l'objet (100) dans la zone d'actionnement (60) peut être défini au moyen du capteur, dans lequel en particulier l'émetteur de lumière est une diode électroluminescente (DEL), une diode électroluminescente organique (DELO) ou une diode laser, en particulier que l'émetteur de lumière émet une lumière infrarouge.

7. Dispositif de poignée (10) selon l'une quelconque des revendications précédentes,
**caractérisé en ce que**
l'objet (100) est une main humaine, un doigt humain ou un composant mécanique.

8. Dispositif de poignée (10) selon l'une quelconque des revendications précédentes,
**caractérisé en ce que**
l'élément de recouvrement est perméable à la lumière pour la longueur d'ondes émise par l'émetteur de lumière, de manière particulièrement préférée que la zone d'actionnement (60) est disposée au-dessus d'un côté extérieur, tourné vers l'objet (100), de l'élément de recouvrement.

9. Dispositif de poignée (10) selon la revendication 8,
**caractérisé en ce que**
la zone d'actionnement (60) est disposée au-dessus d'une surface extérieure, tournée vers l'objet, du boîtier, en particulier que la zone d'actionnement (60) présente une forme de type goutte.

10. Dispositif de poignée (10) selon l'une quelconque des revendications 6 à 9,
**caractérisé en ce que**
le capteur contient au moins un dispositif de mesure optoélectronique avec au moins cinq émetteurs de lumière et au moins un récepteur de lumière.

11. Dispositif de poignée (10) selon l'une quelconque des revendications 6 à 9,
**caractérisé en ce que**
le capteur contient au moins un dispositif de mesure optoélectronique avec au moins deux émetteurs de lumière et au moins un récepteur de lumière, , des faisceaux de détection étant associés aux émetteurs de lumière, qui définissent une zone éloignée située au sein de la zone d'actionnement (60) et une zone plus proche, et que l'élément d'actionnement (50) présente en outre une unité d'évaluation, dans lequel l'unité d'évaluation déclenche un déclenchement du signal en partant d'un déplacement de l'objet (100) depuis une position dans la zone éloignée dans une direction prédéfinie dans la zone plus proche.

12. Dispositif de poignée (10) selon l'une quelconque des revendications 6 à 11,
**caractérisé en ce que**
le capteur est un module HALIOS®.

13. Dispositif de poignée (10) selon l'une quelconque des revendications précédentes,
**caractérisé en ce que**
l'élément d'actionnement (50) présente au moins un élément émetteur (11) pour un rayonnement dans la plage de longueurs d'onde de la lumière et au moins un élément de réception (12) servant à recevoir au moins une partie du rayonnement émis par l'élément émetteur (11) et réfléchi par l'objet (100) ainsi qu'un guide de lumière (13) disposé dans le trajectoire du faisceau entre l'élément émetteur (11) et l'élément de réception (12), dans lequel le guide de lumière (13) présente lui-même des moyens de couplage de lumière servant à l'injection pour le rayonnement dispersé de manière diffuse au niveau de l'objet (100), irradié au préalable par le guide de lumière (13), dans lequel en particulier les moyens de couplage de lumière (13a) injectent la lumière dispersée par l'objet (100) de manière transversale par rapport à l'extension longitudinale du guide de lumière (13) dans le guide de lumière (13).

14. Dispositif de poignée (10) selon l'une quelconque des revendications précédentes,
**caractérisé en ce que**
l'élément d'actionnement (50) présente un ensemble servant à mesurer ou à identifier une modification au niveau d'un élément réfléchissant ou suite à un élément réfléchissant, dans lequel l'ensemble servant à mesurer ou à identifier une modification au niveau d'un élément réfléchissant ou suite à un élément réfléchissant, qui est séparé de l'ensemble par un milieu perméable à un rayonnement défini, avec
- une zone active pour le capteur dans le milieu avec au moins deux trajets de mesure avec des sources de rayonnement associées servant à rayonner le rayonnement défini dans le milieu perméable pour le rayonnement et avec au moins un récepteur de rayonnement, dans lequel le récepteur de rayonnement est disposé dans la zone de chevauchement des zones d'un maximum du profil d'intensité de rayonnement du rayonnement réfléchi, sortant du côté faisant face à l'élément réfléchissant, du milieu dans la zone active pour le capteur se trouvant dans l'état de repos, des sources de rayonnement associées au récepteur de rayonnement pour générer un signal de détection correspondant au rayonnement reçu,
- un ensemble commutateur servant à rendre actif par intermittence chacun des trajets de mesure individuels selon une séquence de commutation, consécutive, récurrente d'une certaine fréquence de séquence de commutation
- un ensemble de réglage servant à régler une puissance de rayonnement dimensionnée de telle manière de la source de rayonnement associée au trajet de mesure respectif que pour une zone active pour le détecteur se trouvant dans l'état de repos, chaque trajet de mesure génère une portion du signal de détection, dont la valeur d'amplitude moyenne est égale à la valeur d'amplitude moyenne des portions, associées à l'au moins un autre trajet de mesure, du signal de détection,
- un circuit de filtrage branché en aval du récepteur de rayonnement, servant à transférer le signal de détection modulé sur une oscillation de la fréquence de séquence de commutation à un ensemble d'évaluation servant à générer un signal de commande et/ou un signal de valeur de mesure à partir de la différence mesurée ou déterminée dans l'ensemble d'évaluation des portions, associées à individuels trajets de mesure, du signal de détection, dans lequel en particulier les au moins deux trajets de mesure sont formés par au moins un émetteur de lumière et plusieurs récepteurs de lumière.

15. Procédé servant à déclencher sans contact un signal au niveau d'un dispositif de poignée (10), dans lequel
le dispositif de poignée (10) sert au déclenchement fonctionnel d'une serrure (19) servant à ouvrir et/ou à fermer une partie (42) mobile, en particulier une portière, un hayon ou similaire d'un véhicule,
le dispositif de poignée (10) présente une unité électronique (20, 20') et un élément d'actionnement,
l'unité électronique (20, 20') sert à la communication de données avec une partie côté véhicule, en particulier un système de sécurité,
une zone d'actionnement (60) est surveillée au moyen de l'élément d'actionnement, et
un signal est déclenché au moyen de l'élément d'actionnement par un mouvement d'un objet (100) à l'intérieur de la zone d'actionnement (60),
dans lequel
la zone d'actionnement (60) est surveillée de manière optique par l'élément d'actionnement, et
le signal est déclenché par une détection d'un schéma de mouvement spécifié par un mouvement de l'objet (100),
dans lequel
un deuxième schéma de mouvement déclenche un deuxième signal, dans lequel lors du schéma de mouvement (30), l'objet est déplacé dans une première direction à travers la zone d'actionnement (60) et lors du deuxième schéma de mouvement (31), l'objet est déplacé dans une deuxième direction à travers la zone d'actionnement (60), et dans lequel la première direction et la deuxième direction sont opposées,
dans lequel
pour l'activation de l'opération de verrouillage, l'objet est déplacé selon le schéma de mouvement (30) dans la première direction à travers la zone d'actionnement (60) et, pour l'activation de l'opération de déverrouillage, l'objet est déplacé selon le deuxième schéma de mouvement (31) dans la deuxième direction à travers la zone d'actionnement (60),
**caractérisé en ce que**
l'élément d'actionnement (50) est disposé dans un boîtier,
dans lequel un élément de recouvrement recouvre l'élément d'actionnement (50), dans lequel l'élément de recouvrement est perméable à la lumière, et dans lequel l'élément de recouvrement est relié au boîtier par liaison de matière.

16. Procédé selon la revendication 15,
**caractérisé en ce que**
le schéma de mouvement (30) comprend un déplacement au moins bidimensionnel de l'objet au sein de la zone d'actionnement (60), en particulier que le schéma de mouvement (30) renferme un déplacement au moins tridimensionnel de l'objet au sein de la zone d'actionnement (60).

17. Procédé selon l'une quelconque des revendications 15 ou 16,
**caractérisé en ce**
**qu'**une activation sans clé d'une opération de verrouillage et de déverrouillage d'un dispositif de fermeture est déclenchée par l'exécution du schéma de mouvement (30), en particulier que l'activation sans clé est déclenchée sans contact au sein de la zone d'actionnement (60).

18. Procédé selon l'une quelconque des revendications 15 ou 17,
**caractérisé en ce qu'**
pour l'activation de l'opération de déverrouillage, un schéma de mouvement rectiligne est exécuté, en particulier que pour l'activation de l'opération de déverrouillage, un utilisateur balaye la zone d'actionnement (60), et/ou que le schéma de mouvement (30) est affiché sur un écran en tant qu'une opération de verrouillage ou de déverrouillage du dispositif de fermeture.

19. Procédé selon l'une quelconque des revendications 15 à 18,
**caractérisé en ce que**
une demande d'autorisation est effectuée pour l'activation de l'opération de déverrouillage et/ou de verrouillage, en particulier la demande d'autorisation est effectuée après le déclenchement du signal, de manière particulièrement préférée qu'un émetteur d'identification mobile effectue avec l'unité électronique (20, 20') un dialogue (21) après le déclenchement du signal, de manière particulièrement préférée que l'autorisation est vérifiée dans le cadre du dialogue (21), dans lequel en particulier dans le cas d'un résultat positif de la demande d'autorisation, l'activation de l'opération de déverrouillage et/ou de verrouillage est effectuée.

20. Procédé selon l'une quelconque des revendications 15 à 19,
**caractérisé en ce que**
l'élément d'actionnement (50) présente un capteur, et le capteur présente au moins deux premières sources de lumière (S1, S2), qui émettent de la lumière selon une cadence de manière séquentielle dans le temps, par phase, et au moins un récepteur (E) servant à recevoir au moins la fraction de lumière alternative synchrone provenant des premières sources de lumière (S1, S2), dans lequel en particulier le capteur régule une intensité de lumière irradiée par au moins une source de lumière (S1, S2) de telle sorte qu'une fraction de lumière alternative synchrone, qui se forme entre des phases différentes, devient nulle au niveau du récepteur (E) et qu'pour la régulation de l'intensité de lumière irradiée, un signal de réception est défini au niveau du récepteur (E) par rapport à la position de phase et qu'ainsi une grandeur de réglage est produite.

21. Procédé selon l'une quelconque des revendications 15 à 20,
**caractérisé en ce que**
pour l'identification d'un schéma de mouvement (30) avec dispositif de poignée (10) selon l'une quelconque des revendications précédentes, avec les étapes :
- d'émettre un rayonnement dans la plage de longueurs d'onde de la lumière,
- faire passer la lumière à travers un guide de lumière (13) jusqu'à l'objet (100),
- réfléchir au moins une partie de la lumière de l'objet (100) et réinjecter la lumière réfléchie dans le guide de lumière (13),
- recevoir la lumière réfléchie en formant un signal d'entrée,
- évaluer le signal d'entrée afin de définir le déplacement et/ou la position de l'objet (10),
- injecter la lumière redispersée de manière diffuse par l'intermédiaire de moyens de couplage de lumière (13a) du guide de lumière (13) per se dans le guide de lumière, dans lequel en particulier les moyens de couplage de lumière (13a) injectent la lumière redispersée par l'objet (100) dans le guide de lumière de manière transversale par rapport à l'extension longitudinale du guide de lumière (13).

22. Procédé selon la revendication 21,
**caractérisé en ce que**
le rayonnement irradié par l'élément émetteur (11) à travers le guide de lumière (13) est irradié en partant du côté (13b) faisant face à l'objet (100) de manière transversale par rapport au guide de lumière (13) avant qu'il ne soit redispersé par l'objet (100), ou que le rayonnement irradié par l'élément émetteur (11) le long du guide de lumière (13) est découplé au moins en partie hors du guide de lumière (13) par les moyens de couplage de lumière (13a) avant qu'il est dispersé par l'objet (100).
